# EUROPEAN PATENT SPECIFICATION

(11) **EP 3 366 518 B1**
(45) Date of publication and mention of the grant of the patent: **11.05.2022**
(21) Application number: 15906768.5
(22) Date of filing: 04.11.2015
(51) Int. Cl.: B60Q 1/26, B60Q 1/52

(54) **VEHICLE EMERGENCY SAFETY DEVICE USING SELFIE STICK**
FAHRZEUG-NOTFALLSICHERHEITSVORRICHTUNG UNTER VERWENDUNG EINES SELFIE-STICKS
DISPOSITIF DE SÉCURITÉ D'URGENCE DE VÉHICULE UTILISANT UNE PERCHE À SELFIE

(30) Priority: 22.10.2015 KR 20150147109
(43) Date of publication of application: 29.08.2018
(73) Proprietor: BONGCHEOL, Kim, Pyeongtaek-si, Gyeonggi-do, 17972 (KR)
(72) Inventor: KYUNG-MIN, Kim, Pyeongtaek-si, Gyeonggi-do, 17803 (KR)
(74) Representative: Becker Kurig & Partner Patentanwälte mbB
(86) International application number: PCT/KR2015/011742
(87) International publication number: WO 2017/069317

(56) References cited:
- WO-A1-2015/124003
- KR-A- 20050 041 574
- KR-A- 20060 005 615
- KR-A- 20150 008 071
- KR-A- 20150 028 277
- KR-A- 20150 028 277
- US-A- 4 870 543

## Description

### [Technical Field]

The present invention relates to a vehicle emergency safety device using a selfie stick, which is attachable to a vehicle door when a vehicle unavoidably stops due to an accident of the vehicle or another vehicle ahead on a road, and gives an easily recognizable warning to following vehicles to prevent secondary or tertiary accidents.

### [Background Art]

Among traffic accidents occurring on motorways, a rate of secondary accidents due to driver inattention, e.g., rear-end collisions caused because an accident is not recognized in advance and crashes into a stationary vehicle on the shoulder of a road, gradually increases and thus loss of life and property also increases.

To inform following vehicles of a hazardous situation ahead on a road or an emergency stop of a vehicle, every vehicle has emergency lights which flicker when manipulated by a driver. In particular, when the vehicle stops on a road or on the shoulder of the road to check an error or breakdown caused while driving, the emergency lights should be turned on and a warning triangle should be placed 100 to 200 m behind the stopped vehicle. Every driver is obliged by the Road Traffic Act to carry and use a warning triangle. The warning triangle is produced to be easily recognizable not only in the daytime but also in the nighttime by reflecting light emitted from headlights. Currently, the warning triangle includes a light-emitting diode, an illuminator, or the like which emits light to increase recognizability and visibility.

A selfie stick includes a cradle for holding a smartphone, and an extendable stick connected to the bottom of the cradle, and retracted when carried and extended when used.

For example, Korean Utility Model Registration No. 20-352673 discloses a detachable signal tube holder for holding an expendable and reusable signal tube containing compressed gunpowder and capable of maintaining a total intensity of light even when the number of emergency lamps or signal tubes thrown onto the ground is reduced, to warn long-distance drivers of a traffic accident, the signal tube holder including a cylindrical body having, at an end thereof, a connection hole to which the signal tube is connected and fixed, a plurality of rotation members hinge-rotatably supported by the end of the cylindrical body and spread in a radial shape, a movable ring spaced apart from a hinge point of the rotation members by a predetermined distance and slidable on the body, a draft spring for generating traction power to move the movable ring with respect to the rotation member supporting end of the body, and a support member hinge-rotatably supported between the movable ring and the rotation members to rotate the rotation members in association with movement of the movable ring.

Korean Utility Model Registration No. 20-40946 discloses a vehicle safety lamp which is turned on by combining a plurality of retractable poles 2, 2', and 2" having different diameters, onto the top of a body 1, mounting a lamp 3 on the top pole 2", coiling a wire 6 on a coiled part 5 produced by coiling a ferroelastic spring 5' around a short shaft 4 in the body 1, to be inserted into the plurality of poles 2, 2', and 2" and wired to the lamp 3, and connecting a power input wire 7 to the wire 6 coiled on the coiled part 6 using a terminal.

Korean Patent Registration No. 10-352673 discloses a detachable signal tube holder for holding an expendable and reusable signal tube containing compressed gunpowder and capable of maintaining a total intensity of light even when the number of emergency lamps or signal tubes thrown onto the ground is reduced, to warn long-distance drivers of a traffic accident, the signal tube holder including a cylindrical body having, at an end thereof, a connection hole to which the signal tube is connected and fixed, a plurality of rotation members hinge-rotatably supported by the end of the cylindrical body and spread in a radial shape, a movable ring spaced apart from a hinge point of the rotation members by a predetermined distance and slidable on the body, a draft spring for generating traction power to move the movable ring with respect to the rotation member supporting end of the body, and a support member hinge-rotatably supported between the movable ring and the rotation members to rotate the rotation members in association with movement of the movable ring.

Korean Patent Registration No. 10-356225 discloses a portable emergency lamp including a height-adjustable light bar assembly 10, a link-combined support stick 11 supporting the light bar assembly 10, a height-variable screw bar 12 of the support stick 11, a belt 13 and a motor 14 for rotating the height-variable screw bar 12, a wire-coiling roller 15 extendable and connectable to a vehicle to supply power to the light bar assembly 10, and a frame 17 for mounting the above elements and having at least four wheels 16.

Korean Patent Publication No. 10-2005-41574 discloses an emergency indication method of a vehicle, by which an indicator body, which selectively operates due to manipulation of a driver or a detection signal of a crash sensor, is mounted on the roof of the vehicle or at a rear side of a trunk, the indicator body is open to display a warning indication at a moment when the running vehicle is suddenly braked or stopped for any reason, and thus drivers of following and oncoming vehicles recognize the indication and are prepared for a hazardous situation, thereby preventing additional accidents US 4 870 543 A discloses a further vehicle emergency safety device of the prior art.

### [Disclosure]

### [Technical Problem]

Therefore, the present invention has been made in view of the above problems, and it is one object of the present invention to provide a vehicle emergency safety device using a selfie stick, the device being capable of solving problems of the above-described conventional technologies by which a traffic accident within a short distance ahead cannot be recognized if the view is blocked by another vehicle or the like, a driver should personally exit a vehicle and take the risk of accident due to vehicles travelling on a road in order to place a warning triangle at a certain distance behind the vehicle after the driver has an accident and temporarily stops the vehicle on the road or on the shoulder of the road, and the vehicle emergency safety device cannot be easily attached to the vehicle.

### [Technical Solution]

The present invention is an improved version of Korean Patent Application No. 10-2010-0045967 (20100517; Registration No. (Date) 10-01170968 (20120730)) entitled Vehicle Emergency Safety Device' and Korean Patent Application No. 10-2014-7029272 entitled 'Vehicle Emergency Safety Device Attachable to Vehicle Door' filed by the present applicant, and provides a vehicle emergency safety device, as described in appended claim 1.

### [Advantageous Effects]

A vehicle emergency safety device using a selfie stick, according to the present invention, may be easily and rapidly attached to a vehicle door by anyone.

Since a stopped vehicle may be recognized from 300 m to 1,000 m behind and a driver of a following vehicle may recognize an emergency situation, a rear-end collision due to lack of recognizability may be prevented, danger and inconvenience of placing a warning triangle 100 to 200 m behind and bringing the warning triangle back after the emergency situation ends may be solved, and the emergency situation may be rapidly and correctly recognized by other drivers.

### [Description of Drawings]

FIG. 1 is a perspective view of a vehicle emergency safety device using a selfie stick, according to the present invention.
FIG. 2 is a detailed perspective view of the vehicle emergency safety device using the selfie stick, according to the present invention.
FIG. 3 is a detailed perspective view of a flasher according to the present invention.
FIG. 4 is a detailed perspective view of a fixing clamp according to the present invention.
FIG. 5 is a perspective view showing how to use a cradle and a joint according to the present invention.

### [Best Mode]

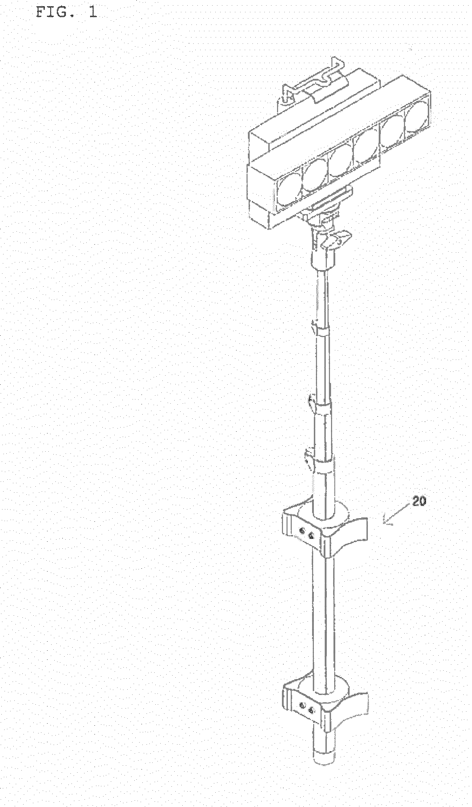

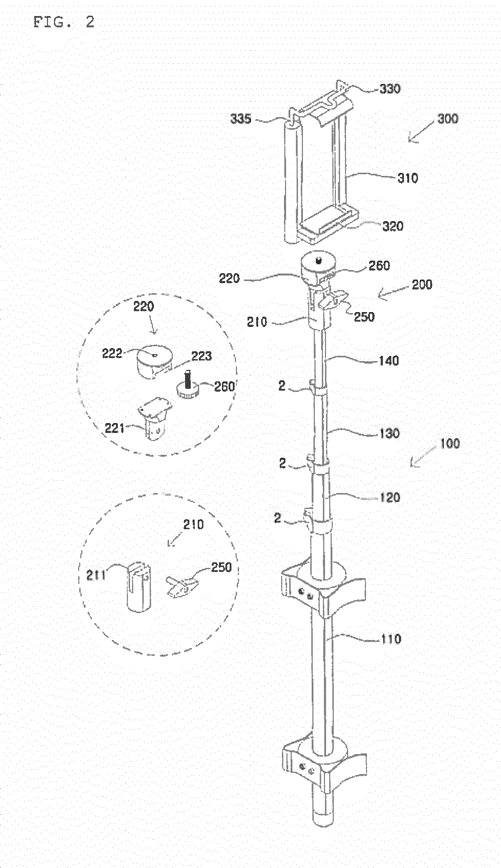

The present invention provides a vehicle emergency safety device using a selfie stick, the device including a support stick 100 including first, second, third, and fourth poles 110, 120, 130, and 140 having different diameters and extendable to a desired length in a telescopic manner by pulling out the second, third, and fourth poles 120, 130, and 140 sequentially retracted into the first pole 110 having the largest diameter,
two fixing clamps 20 provided at a lower part of the support stick 100,
a joint 200 provided on the top of the support stick 100, a cradle 300 provided on the top of the joint 200 and 360°-rotatable by a second adjusting screw 260, and a flasher 10 inserted into and fixed to the cradle 300. As illustrated in FIGS. 1 and 2, the support stick 100 of the vehicle emergency safety device includes the first, second, third, and fourth poles 110, 120, 130, and 140 having different diameters, and is used by pulling out the second, third, and fourth poles 120, 130, and 140 sequentially retracted into the first pole 110 having the largest diameter, to a desired length in a telescopic manner, fitting the flasher 10 into the cradle 300 provided on the top of the fourth pole 140, attaching the device to a side of a vehicle door using the two fixing clamps 20 provided on the first pole 110, spaced apart from each other by a certain distance, and including clips, and then adjusting the joint 200 located between the fourth pole 140 and the cradle 300.

### [Mode of the Invention]

The present invention relates to a vehicle emergency safety device using a selfie stick, the device including a support stick 100 including first, second, third, and fourth poles 110, 120, 130, and 140 having different diameters and extendable to a desired length in a telescopic manner by pulling out the second, third, and fourth poles 120, 130, and 140 sequentially retracted into the first pole 110 having the largest diameter,
two fixing clamps 20 provided at a lower part of the support stick 100,
a joint 200 provided on the top of the support stick 100, a cradle 300 provided on the top of the joint 200 and 360°-rotatable by a second adjusting screw 260, and a flasher 10 inserted into and fixed to the cradle 300.

As illustrated in FIGS. 1 and 2, the support stick 100 according to the present invention includes the first, second, third, and fourth poles 110, 120, 130, and 140 having different diameters, and is used by pulling out the second, third, and fourth poles 120, 130, and 140 sequentially retracted into the first pole 110 having the largest diameter, to a desired length in a telescopic manner, fitting the flasher 10 into the cradle 300 provided on the top of the fourth pole 140, attaching the device to a side of a vehicle door using the two fixing clamps 20 provided on the first pole 110, spaced apart from each other by a certain distance, and including clips, and then adjusting the joint 200 located between the fourth pole 140 and the cradle 300.

The support stick 100 includes the first, second, third, and fourth poles 110, 120, 130, and 140 and is extendable to a desired length by retracting or extending the second, third, and fourth poles 120, 130, and 140 into or from the first pole 110 having the largest diameter.

The first, second, third, and fourth poles 110, 120, 130, and 140 have different diameters. That is, an upper pole has a smaller diameter than a lower pole. Stoppers 2 are provided at upper ends of the first, second, and third poles 110, 120, and 130 to fix the same after being extended to a certain length.

As illustrated in FIGS. 1, 2, and 5, the joint 200 uses a conventional selfie stick joint and, specifically, includes a fixing member 210 and a hinge member 220. The fixing member 210 is provided at an end of the fourth pole 140, and a hinge member lower part 221 of the hinge member 220 is inserted into and fixed to a fixing member upper recess 211 provided at an upper part of the fixing member 210.

A first adjusting screw 250 penetrates through the fixing member upper recess 211 and the hinge member lower part 221 inserted into the fixing member upper recess 211 in such a manner that an angle of the hinge member 220 is adjustable only in one direction, e.g., a left-right direction or a front-rear direction, by the first adjusting screw 250.

A hinge member upper recess 222 is provided in the top center of the hinge member 220, a hinge member central side slot 223 is horizontally provided, and thus the center of the hinge member 220 may rotate the cradle 300 provided on the top of the joint 200 by 360° and fix the same using the horizontally provided hinge member central side slot 223 and the second adjusting screw 260 provided in the hinge member upper recess 222. As such, an improvement in structure may be achieved.

As illustrated in FIGS. 1, 2, and 5, the cradle 300 is used to hold and fix the flasher 10 including a plurality of light-emitting diodes (LEDs) or the like.

The cradle 300 according to the present invention has a "⊏" shape, and a fixed grip 320 provided at a lower part of a body plate 310 and a movable grip 330 provided at an upper part of the body plate 310 are elastically supported in directions toward each other in such a manner that the flasher 10 is pressed and fixed between the fixed grip 320 and the movable grip 330.

Specifically, the fixed grip 320 is integrally provided at an end of the body plate 310, the movable grip 330 includes slidable bars 335 inserted into and vertically slidable along two side grooves of the body plate 310, and elastic means (not shown) for exerting elastic force to move the movable grip 330 toward the fixed grip 320 are provided in the two side grooves of the body plate 310.

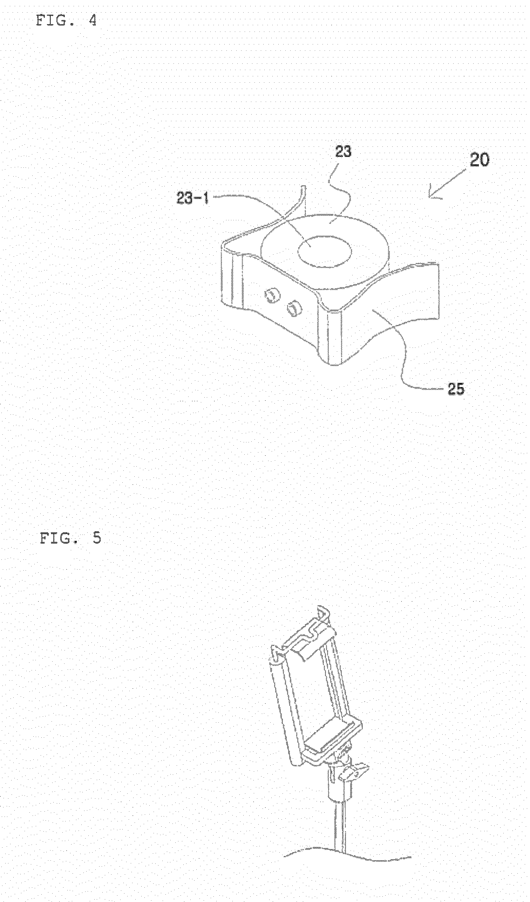

As illustrated in FIG. 4, each of the two fixing clamps 20 inserted into and fixed to the support stick 100 and spaced apart from each other by a certain distance includes a fixing ring 23 and a fixing clip 25 attached to the outside of the fixing ring 23,

The first pole 110 is inserted into a through-hole 23-1 provided in the center of the fixing ring 23.

The fixing clip 25 provided outside the fixing ring 23 is attached and assembled to the fixing ring 23 using bolts and nuts.

The fixing clips 25 provided on the fixing clamps 20 are fixed and attached to an end of the vehicle door. As such, an improvement in structure may be achieved.

The present invention will now be described with reference to the attached drawings.

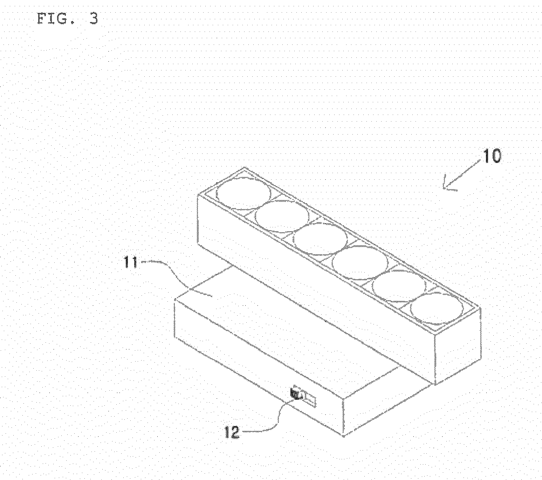

FIG. 1 is a perspective view of a vehicle emergency safety device using a selfie stick, according to the present invention, FIG. 2 is a detailed perspective view of the vehicle emergency safety device using the selfie stick, according to the present invention, FIG. 3 is a detailed perspective view of a flasher according to the present invention, FIG. 4 is a detailed perspective view of a fixing clamp according to the present invention, and FIG. 5 is a perspective view showing how to use a cradle and a joint according to the present invention.

FIGS. 1 to 5 illustrate stoppers 2, a flasher 10, a battery case 11, a switch 12, fixing clamps 20, fixing rings 23, through-holes 23-1, fixing clips 25, a support stick 100, first, second, third, and fourth poles 110, 120, 130, and 140, a joint 200, a fixing member 210, a fixing member upper recess 211, a hinge member 220, a hinge member lower part 221, a hinge member upper recess 222, a hinge member central side slot 223, a first adjusting screw 250, a second adjusting screw 260, a cradle 300, a body plate 310, a fixed grip 320, a movable grip 330, and slidable bars 335.

In terms of structure, as illustrated in FIGS. 1 to 4, the vehicle emergency safety device using the selfie stick, according to the present invention, includes
the support stick 100 including the first, second, third, and fourth poles 110, 120, 130, and 140 having different diameters and extendable to a desired length in a telescopic manner by pulling out the second, third, and fourth poles 120, 130, and 140 sequentially retracted into the first pole 110 having the largest diameter,
two fixing clamps 20 provided at a lower part of the support stick 100,
the joint 200 provided on the top of the support stick 100, the cradle 300 provided on the top of the joint 200 and 360°-rotatable by the second adjusting screw 260, and the flasher 10 inserted into and fixed to the cradle 300 and including the battery case 11 and the switch 12.

The support stick 100 includes the first, second, third, and fourth poles 110, 120, 130, and 140 having a pipe shape with grooves at two sides thereof, having diameters sequentially reduced from the bottom to the top, and retracted in a telescopic manner,
the stoppers 2 provided at uppermost parts of the first, second, and third poles 110, 120, and 130, and
the two fixing clamps 20 provided on the first pole 110 and spaced apart from each other by a certain distance.

The fixing clamp 20 includes the fixing ring 23 having a through-hole in the center thereof, and the fixing clip 25 fixed to the outside of the fixing ring 23 using bolts and nuts as illustrated in FIG. 4.

The joint 200 includes the fixing member 210 fixed to an end of the fourth pole 140,
the hinge member lower part 221 inserted into and fixed to the fixing member upper recess 211 provided at an upper part of the fixing member 210, and having a through-hole in the center thereof,
the first adjusting screw 250 penetrating through the fixing member upper recess 211 and the hinge member lower part 221,
the hinge member upper recess 222 provided in the top center of the hinge member 220, the hinge member central side slot 223 horizontally provided in the center of the hinge member 220, and the second adjusting screw 260 provided in the hinge member central side slot 223 and having an upper part provided in the hinge member upper recess 222.

The cradle 300 has a "⊏" shape and includes
the body plate 310 having body plate grooves (not shown) at two sides thereof, elastic means (not shown) provided in lower parts of the body plate grooves (not shown),
the fixed grip 320 provided at a lower part of the body plate 310, and the movable grip 330 provided at an upper part of the body plate 310 and including the slidable bars 335 at two sides thereof.

In terms of usage, when an emergency occurs, emergency lights are turned on and a vehicle stops.

The vehicle emergency safety device according to the present invention is taken out of a safety box in a trunk of the vehicle, and then the retracted support stick 100 of the vehicle emergency safety device is extended by pulling out the first, second, third, and fourth poles 110, 120, 130, and 140 in a telescopic manner, and is fixed using the stoppers 2.

The flasher 10 is mounted on the cradle 300 provided on the top of the fourth pole 140 in such a manner that the flasher 10 is pressed and fixed between the fixed grip 320 and the movable grip 330 of the cradle 300, and the flasher 10 is switched on.

The fixing clips 25 of the two fixing clamps 20 provided on the first pole 110 of the support stick 100 and spaced apart from each other by a certain distance are attached to an end of a vehicle door in such a manner that the end of the vehicle door is inserted between the fixing ring 23 and (one of) two sides of the fixing clip 25.

The flasher 10 faces backward by adjusting the joint 200 located between the fourth pole 140 and the cradle 300. Thus, the stopped vehicle may be easily recognized by other vehicles.

Thereafter, the vehicle emergency safety device may be detached in reverse order of the above-described method. As such, the vehicle emergency safety device may be used when the vehicle is involved in an accident.

### [industrial Applicability]

A vehicle emergency safety device using a selfie stick, according to the present invention, may be attached to a vehicle door when a vehicle unavoidably stops due to an accident, and may include
a support stick 100 including first, second, third, and fourth poles 110, 120, 130, and 140 having different diameters and extendable to a desired length in a telescopic manner by pulling out the second, third, and fourth poles 120, 130, and 140 sequentially retracted into the first pole 110 having the largest diameter,
two fixing clamps 20 provided at a lower part of the support stick 100,
a joint 200 provided on the top of the support stick 100, a cradle 300 provided on the top of the joint 200 and 360°-rotatable by a second adjusting screw 260, and a flasher 10 inserted into and fixed to the cradle 300.

## Claims

1. A vehicle emergency safety device, comprising a selfie stick, the selfie stick including a cradle and an extendable support stick connected to the bottom of the cradle, said support stick (100) comprising first, second, third, and fourth poles (110, 120, 130, 140) having a pipe shape with grooves at two sides and having different diameters sequentially reduced from the first pole to the fourth pole and being extendable to a desired length in a telescopic manner by pulling out the second, third, and fourth poles (120, 130, 140) sequentially retracted into the first pole (110) having the largest diameter; said device further comprising:
two fixing clamps (20) provided at a lower part of the support stick (100);
a joint (200) provided on the top of the support stick (100);
said cradle (300) being provided on the top of the joint (200) and 360°-rotatable by a second adjusting screw (260); and
a flasher (10) inserted into and fixed to the cradle (300) and comprising a battery case (11) and a switch (12),
stoppers (2) provided at uppermost parts of the first, second, and third poles (110, 120, 130);
and the two fixing clamps (20) provided on the first pole (110) and spaced apart from each other by a certain distance,
wherein each fixing clamp (20) comprises:
a fixing ring (23) having a through-hole in the center thereof; and
a fixing clip (25) fixed to the outside of the fixing ring (23) using bolts and nuts
wherein the joint (200) comprises:
a fixing member (210) fixed to an end of the fourth pole (140);
a hinge member lower part (221) of a hinge member (220) inserted into and fixed to a fixing member upper recess (211) provided at an upper part of the fixing member (210), and having a through-hole in the center thereof;
a first adjusting screw (250) penetrating through the fixing member upper recess (211) and the hinge member lower part (221);
a hinge member upper recess (222) provided in the top center of the hinge member (220);
a hinge member central side slot (223) provided in a transverse direction in the center of the hinge member (220); and
the second adjusting screw (260) provided in the hinge member central side slot (223) and
having an upper part provided in the hinge member upper recess (222), and
wherein the cradle (300) has a "C" shape and comprises:
a body plate (310) having body plate grooves at two sides thereof;
elastic means provided in lower parts of the body plate grooves
a fixed grip (320) provided at a lower part of the body plate (310); and
a movable grip (330) provided at an upper part of the body plate (310) and comprising slidable bars (335) at two sides thereof.

## Patentansprüche

1. Fahrzeug-Notfall-Sicherheitsvorrichtung, umfassend einen Selfie-Stick, wobei der Selfie-Stick eine Halterung und einen ausziehbaren Stützstab einschließt, der mit dem unteren Ende der Halterung verbunden ist, wobei der Stützstab (100) erste, zweite, dritte und vierte Stangen (110, 120, 130, 140) umfasst, aufweisend eine Rohrform mit Nuten an zwei Seiten und aufweisend unterschiedliche Durchmesser, die sequentiell von der ersten Stange zu der vierten Stange verringert werden und durch Herausziehen der zweiten, dritten und vierten Stange (120, 130, 140), die sequentiell in die erste Stange (110) mit dem größten Durchmesser eingezogen werden, auf eine gewünschte Länge in einer teleskopartigen Weise ausgezogen werden können;
wobei die Vorrichtung ferner umfasst:
zwei Befestigungsklammern (20), die an einem unteren Teil des Stützstabs (100) bereitgestellt sind;
eine Verbindung (200), die an dem oberen Ende des Stützstabs (100) bereitgestellt ist;
wobei die Halterung (300), die an dem oberen Ende der Verbindung (200) bereitgestellt ist und durch eine zweite Einstellschraube (260) 360 ° drehbar ist; und
einen Blinkgeber (10), der in die Halterung (300) eingesetzt und daran befestigt ist und ein Batteriegehäuse (11) und einen Schalter (12) umfasst,
Stopper (2), die an obersten Teilen der ersten, zweiten und dritten Stange (110, 120, 130) bereitgestellt sind; und
die zwei Befestigungsklammern (20), die an der ersten Stange (110) bereitgestellt sind und um einen bestimmten Abstand voneinander beabstandet sind,
wobei jede Befestigungsklammer (20) umfasst:
einen Befestigungsring (23) mit einem Durchgangsloch in seiner Mitte; und
einen Befestigungsclip (25), der an der Außenseite des Befestigungsrings (23) unter Verwendung von Bolzen und Muttern befestigt ist,
wobei die Verbindung (200) umfasst:
ein Befestigungselement (210), das an einem Ende der vierten Stange (140) befestigt ist;
ein Gelenkelement-Unterteil (221) eines Gelenkelements (220), das eingesetzt ist in und befestigt ist an einer oberen Befestigungselement-Ausnehmung (211), die an einem oberen Teil des Befestigungselements (210) bereitgestellt ist und in dessen Mitte ein Durchgangsloch aufweist;
eine erste Einstellschraube (250), die durch die obere Befestigungselement-Ausnehmung (211) und das Gelenkelement-Unterteil (221) hindurchgeht;
eine obere Gelenkelement-Ausnehmung (222), die in der Mitte des oberen Endes des Gelenkelements (220) bereitgestellt ist;
einen mittleren Gelenkelement-Seitenschlitz (223), der in einer querverlaufenden Richtung in der Mitte des Gelenkelements (220) bereitgestellt ist; und
die zweite Einstellschraube (260), die in dem mittleren Gelenkelement-Seitenschlitz (223) bereitgestellt ist und einen oberen Teil aufweist, der in der oberen Gelenkelement-Ausnehmung (222) bereitgestellt ist, und
wobei die Halterung (300) eine "C"-Form aufweist und umfasst:
eine Körperplatte (310) mit Körperplattennuten an seinen zwei Seiten;
elastische Mittel, die in unteren Teilen der Körperplattennuten bereitgestellt sind;
einen festen Griff (320), der an einem unteren Teil der Körperplatte (310) bereitgestellt ist; und
einen beweglichen Griff (330), der an einem oberen Teil der Körperplatte (310) bereitgestellt ist und verschiebbare Stangen (335) an zwei seiner Seiten umfasst.

## Revendications

1. Un dispositif de sécurité d'urgence pour véhicule, comprenant une perche à selfie, la perche à selfie comprenant un berceau et une perche de support extensible reliée à la partie inférieure du berceau, ladite perche de support (100) comprenant des premier, deuxième, troisième et quatrième segments (110, 120, 130, 140) ayant une forme de tube avec des rainures sur les deux côtés et ayant des diamètres différents, réduits séquentiellement du premier segment au quatrième segment et étant extensibles à une longueur souhaitée de manière télescopique en tirant de façon séquentielle les deuxième, troisième et des quatrièmes segments (120, 130, 140) rétractés dans le premier segment (110) ayant le plus grand diamètre ; ledit dispositif comprenant en outre :
deux pinces de fixation (20) prévues à une partie inférieure de la perche de support (100) ;
une articulation (200) prévue sur le dessus de la perche de support (100) ;
ledit berceau (300) étant prévu sur le dessus du articulation (200) et étant apte à tourner sur 360° par une deuxième vis de réglage (260) ; et
un clignotant (10) inséré dans le berceau (300) et fixé à celui-ci, et comprenant un boîtier de batterie (11) et un interrupteur (12),
des butées (2) prévues au niveau des parties les plus hautes des premier, deuxième et troisième segments (110, 120, 130) ; et
les deux pinces de fixation (20) étant prévues sur le premier segment (110) et étant espacées l'une de l'autre d'une certaine distance,
chaque pince de fixation (20) comprenant :
une bague de fixation (23) ayant un trou traversant au centre d'elle-même ; et
un clip de fixation (25) fixé à l'extérieur de la bague de fixation (23) au moyen de boulons et d'écrous,
l'articulation (200) comprenant :
un élément de fixation (210) fixé à une extrémité du quatrième segment (140) ;
une partie inférieure (221) d'élément de charnière d'un élément de charnière (220) inséré dans un évidement supérieur (211) d'élément de fixation prévu au niveau d'une partie supérieure de l'élément de fixation (210), et fixé à cet élément, et ayant un trou traversant au centre d'elle-même ;
une première vis de réglage (250) pénétrant à travers l'évidement supérieur (211) d'élément de fixation et la partie inférieure (221) d'élément de charnière ;
un évidement supérieur (222) d'élément de charnière prévu au centre supérieur de l'élément de charnière (220) ;
une fente latérale centrale (223) d'élément de charnière prévue dans une direction transversale au centre de l'élément de charnière (220) ; et
la deuxième vis de réglage (260) prévue dans la fente latérale centrale (223) d'élément de charnière et ayant une partie supérieure prévue dans l'évidement supérieur (222) d'élément de charnière, et
le berceau (300) ayant une forme en « C » et comprend :
une plaque de corps (310) ayant des rainures de plaque de corps sur deux côtés d'elle-même ;
des moyens élastiques prévus dans les parties inférieures des rainures de la plaque de corps,
une poignée fixe (320) prévue au niveau d'une partie inférieure de la plaque de corps (310) ; et
une poignée mobile (330) prévue à une partie supérieure de la plaque de corps (310) et comprenant des barres coulissantes (335) sur deux côtés de celle-ci.
